# EUROPÄISCHE PATENTSCHRIFT

(11) **EP 2 134 486 B1**
(45) Veröffentlichungstag und Bekanntmachung des Hinweises auf die Patenterteilung: **03.11.2010**
(21) Anmeldenummer: 08734334.9
(22) Anmeldetag: 28.02.2008
(51) Int. Cl.: B21D 22/04, B21D 35/00, B21D 53/88, B60N 2/30

(54) **LAGERBOLZEN-BAUTEIL UND FAHRZEUGSITZ MIT EINEM LAGERBOLZEN-BAUTEIL**
BEARING JOURNAL COMPONENT AND VEHICLE SEAT COMPRISING A BEARING JOURNAL COMPONENT
COMPOSANT AXE DE PALIER ET SIÈGE DE VÉHICULE COMPRENANT UN COMPOSANT AXE DE PALIER

(30) Priorität: 03.03.2007 DE 102007010373
(43) Veröffentlichungstag der Anmeldung: 23.12.2009
(73) Patentinhaber: Faurecia Autositze GmbH, 31655 Stadthagen (DE)
(72) Erfinder: HÄNTSCH, Andreas, 30159 Hannover (DE); KEMPF, Heiner, 30449 Hannover (DE)
(74) Vertreter: Bremer, Ulrich
(86) Internationale Anmeldenummer: PCT/DE2008/000354
(87) Internationale Veröffentlichungsnummer: WO 2008/106936

(56) Entgegenhaltungen:
- EP-A- 1 857 625
- DE-C1- 10 133 708

## Beschreibung

Die Erfindung betrifft ein Lagerbolzen-Bauteil gemäß dem Oberbegriff von Anspruch 1 und einen Fahrzeugsitz mit einem Lagerbolzen-Bauteil.

Bei Fahrzeugsitzen mit schwenk- und/oder klappbarer Rückenlehne wird die Lehnenachse im Allgemeinen durch einen am Lehnenteil ausgebildeten Bolzen gebildet, der in eine Lageraufnahme bzw. ein Lagerauge des Sitzrahmens eingesetzt wird. Diese Lageranbindung muss hinreichend stabil sein, um die bei normaler Fahrt auftretenden Kräfte, und ergänzend die bei einem möglichen Crash auftretenden hohen Kräfte aufzufangen.

Hierzu wird im Allgemeinen ein kaltgepresstes und nachfolgend heiß geschmiedetes Bauteil verwendet, das einen länglichen Befestigungsbereich und einen Bolzen aufweist, wobei der längliche Befestigungsbereich am Lehnenteil bzw. dessen Struktur angeschweißt wird und der Bolzen sich von dem Befestigungsbereich aus nach außen erstreckt und ein Innengewinde aufweist, in das eine Schraube eingeschraubt wird. Dieser vorstehende Bolzen mit der eingesetzten Schraube dient somit als Lagerbolzen zur Definition der Schwenkachse.

Derartige kalt gepresste und geschmiedete Bauteile aus Stahl sind hinreichend fest, um die erforderlichen Kräfte und Momente aufzufangen. Sie sind jedoch recht kostspielig in der Herstellung und weiterhin relativ schwer.

Die DE 101 33 708 C1 zeigt ein Befestigungssystem für eine geteilte Kraftfahrzeug-Fondlehne, bei dem zwei Lehnenteile und ein zwischen ihnen angeordneter Mittenbeschlag durch einen Lagerbolzen verbunden sind, der einen hinreichend langen Bolzenschaft aufweist, wobei an seinem freien Ende zwei beabstandete Einstiche ausgebildet sind. Die zweiteilige Form des Anspruchs 1 basiert auf diese Patentschrift.

Die nachveröffentlichte EP 1 857 625 A1 beschreibt ein Verfahren zum Herstellen eines Trägerbauteils für eine Aufhängung. Das Trägerbauteil weist eine Platte auf, die mittels Durchgangslöchern an einem Rahmen einer Tür oder Fenster, bzw. eines festen Rahmens befestigt werden kann. Von der Platte erstreckt sich ein hohles Element ab, das als Lagerbolzen zum Einsatz in ein entsprechendes Loch der Tür bzw. des festen Rahmens dient. Dieses hohle Element weist an seiner Vorderseite ein geschlossenes Ende auf, das als ein Stopper wirkt, und ist an seiner Rückseite, d.h. im Bereich der Platte, offen.

Die CH 639 178 A zeigt einen selbstsichernden Lagerbolzen zur Sicherung gegen axiale Verschiebung beim Einbau in Maschinenteilen, der aus einem gebogenen Blechstreifen hergestellt ist. Hierdurch wird ein hohler, rohrartiger Bolzen gebildet, in dem Längsschlitze ausgebildet sein können.

Der Erfindung liegt die Aufgabe zugrunde, ein Lagerbolzen-Bauteil und einen Fahrzeugsitz mit einem derartigen Lagerbolzen-Bauteil zu schaffen, die eine sichere Lageranbindung bei nicht zu hohen Herstellungskosten und geringem Gesamtgewicht ermöglichen.

Diese Aufgabe wird durch ein Lagerbolzen-Bauteil nach Anspruch 1 sowie einen Fahrzeugsitz mit einem Lagerbolzen-Bauteil nach Anspruch 3 gelöst. Die Unteransprüche beschreiben bevorzugte Weiterbildungen.

Erfindungsgemäß wird das Lagerbolzen-Bauteil somit nicht als Kaltpress- und Schmiedeteil, sondern als Umformteil aus Blech hergestellt. Hierdurch kann es leichter und mit geringeren Herstellkosten ausgebildet werden.

Erfindungsgemäß wird das Lagerbolzen-Bauteil hierbei einteilig als Blechumformteil hergestellt, wobei sowohl der Bolzen als auch der Befestigungsbereich durch ein Umformverfahren mit mehreren aufeinanderfolgenden Prozessschritten hergestellt werden können. Durch eine bevorzugte Kaltumformung wird die Festigkeit des Stahlblechs erhöht, so dass es abschließend eine hohe Festigkeit zur Aufnahme der einwirkenden Kräfte und Momente aufweist.

Zur Herstellung kann ein Ausgangsblech aus einem hinreichend verformbaren, duktilen, kostengünstigen Stahl direkt vom Coll abgewickelt und in mehreren Prozessschritten verformt werden. Hierbel wird vorzugsweise auch der Bolzen einteilig ohne Schweißnaht aus dem Stahlmaterial geformt und entsprechend der hintere Anbindungsbereich in gewünschter Dicke ausgeformt. Zur Ausbildung des Bolzens als Tube bzw. rohrförmiger Ansatz kann eine Tubenzieh-Technologie eingesetzt werden, bei der in mehreren aufeinander folgenden Prozessschritten zunächst ein Napf in das Ausgangsblech eingezogen wird und die so ausgebildete Tube nachfolgend in mehreren Prozessschritten gestaucht wird. Bei dieser Herstellung kann ein Folgeverbund-Verfahren eingesetzt werden, bei dem das Ausgangsblech in einzelnen Schritten durch ein Folgeverbundwerkzeug geschoben wird, bis in den aufeinander folgenden Umformschritten die gewünschten Formgebungen erreicht sind; im letzten Arbeitsgang werden die Teile vom Blechstreifen abgetrennt.

Die Schweißung kann z.B. durch CO2-Schweißen oder auch durch Laserschweißen erfolgen. Zum Laserschweißen werden vorteilhafterweise an der Unterseite des Befestigungsbereiches ein oder mehrere Flansche angebracht. So kann ein vorderer Flansch zur Befestigung am äußeren Träger des Lehnenteils und ein hinterer Flansch zur Befestigung an einer inneren Blechplatte oder einem Querträger des Lehnenteils dienen.

Die Erfindung wird im Folgenden anhand der beiliegenden Zeichnungen an einer Ausführungsform erläutert. Es zeigen:

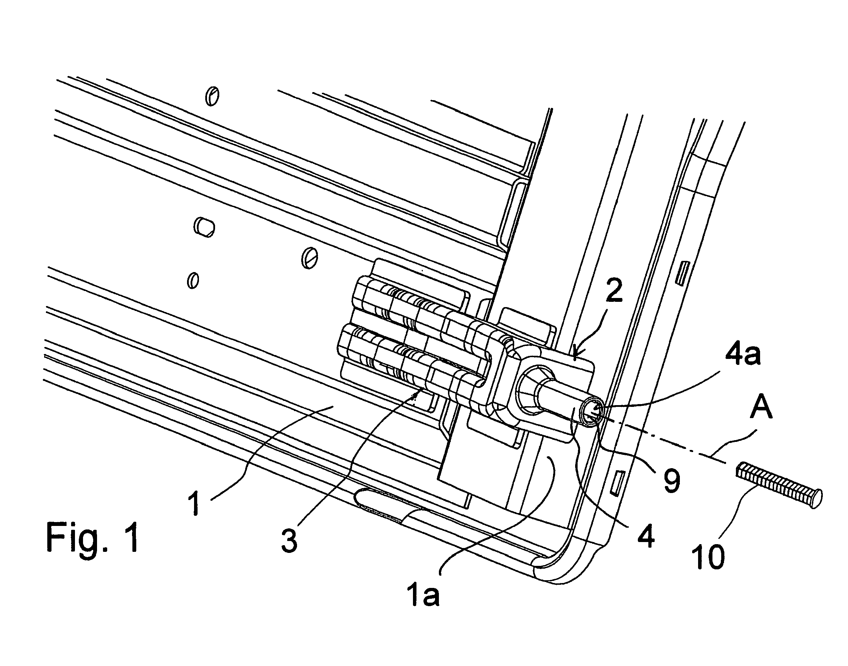

- Fig. 1: eine perspektivische Ansicht eines Lehnenteils mit befestig- tem Lagerbolzen-Bauteil;
- Fig. 2: eine weitere perspektivische Ansicht des Lagerbolzen- Bauteils;
- Fig. 3: eine Seitenansicht des Lagerbolzen-Bauteils;
- Fig. 4: eine Draufsicht auf das Lagerbolzen-Bauteil.

Ein Lehnenteil 1 eines Fahrzeugsitzes ist schwenkbar an einem in den Figuren nicht gezeigten Sitzrahmen gelagert. Das Lehnenteil 1 kann insbesondere eine Rückenlehne, oder auch z.B. eine Durchlade oder ein anderes klappbares Funktionslehnenteil, z.B. mit Tischfunktion, sein.

Das Lehnenteil 1 ist an dem Sitzrahmen in einer Lehnenachse A schwenkbar gelagert, die durch ein am Lehnenteil 1 befestigtes Lagerbolzen-Bauteil 2 und eine am Sitzrahmen ausgebildete, das Lagerbolzen-Bauteil 2 aufnehmende, hier nicht gezeigte Lageraufnahme (Lagerauge) definiert ist.

Das Lagerbolzen-Bauteil 2 weist einen hinteren Befestigungsbereich 3 und einen vorderen Bolzen 4 auf. Der Befestigungsbereich 3 dient der Befestigung am Lehnenteil 1. Der Bolzen 4 ragt in seitlicher Richtung - entlang der Achse A - seitlich vor zum Einsatz in die Lageraufnahme des Sitzrahmens.

Erfindungsgemäß ist das Lagerbolzen-Bauteil 2 als einteiliges BlechUmformteil aus Stahl ausgebildet. Ergänzend können an der Unterseite des Befestigungsbereichs 3 seitlich vorstehende Flansche 5a, b befestigt werden, um eine Anbringung am Lehnenteil 1 durch Laserschweißen zu ermöglichen. Hierbei kann z. B. ein vorderer Flansch 5a zum Aufsetzen auf einen Vertikalträger des Lehnenteils 1 und ein hinterer Flansch 5b zum Aufsetzen auf ein mittleres Blech oder einen Querträger des Lehnenteils 1 angebracht werden. Grundsätzlich kann das Lagerbolzen-Bauteil 2 jedoch auch ohne diese Flansche 5a, b ausgebildet und z.B. durch CO2-Schweißen am Lehnenteil 1 befestigt werden.

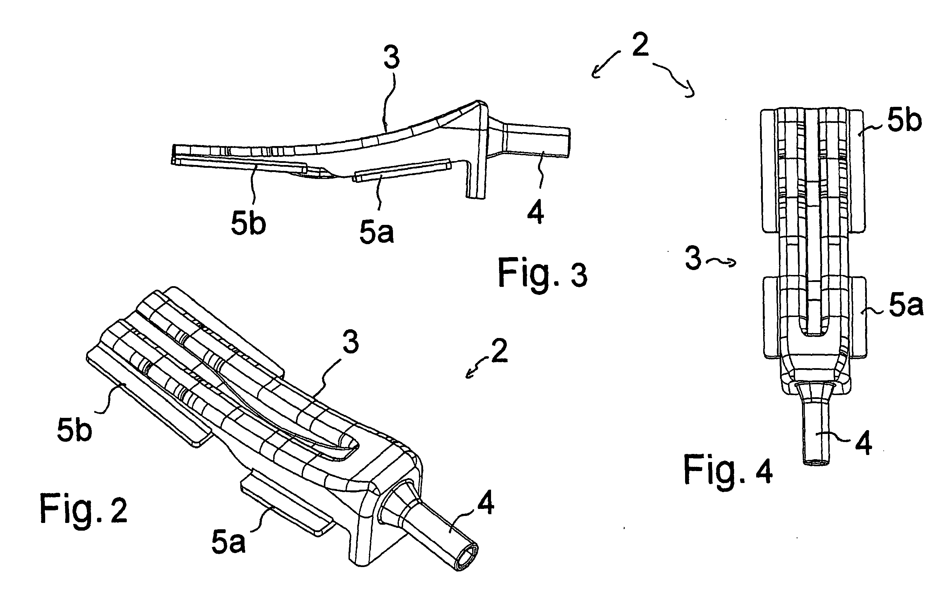

Der Befestigungsbereich 3 nimmt in seiner Höhe - wie z.B. in Figur 3 zu erkennen ist - zum Bolzen 4 hin vorteilhafterweise stetig zu. Der Befestigungsbereich 3 ist an seinem rechten, vorderen Ende auf eine Kante 1a des Vertikalträgers des Lehnenteils 1 gesetzt und dort mittels einer Vertikalschweißung befestigt. Der Bolzen 4 ist z. B. in seinem hinteren Bereich zunächst etwas konisch und in seinem vorderen Bereich rohrförmig ausgebildet. Er weist ein Loch 4a mit einem Innengewinde 9 zur Aufnahme einer Schraube 10 auf, die - in an sich bekannter Weise - in die Lageraufnahme des Sitzrahmens eingesetzt wird. Die Schraube 10 ist hierbei nur schematisch dargestellt.

Die Herstellung des erfindungsgemäßen Lagerbolzen-Bauteils 2 erfolgt durch einen mehrstufigen Umformprozess. Hierbei kann ein Folgeverbundverfahren eingesetzt werden, bei dem ein Ausgangsblech direkt von einem Coil aus kostengünstigem duktilen Stahl abgewickelt und durch ein Folgeverbundwerkzeug geführt wird. Zunächst wird der Bolzenschaft als Tube hergestellt, indem in das Ausgangsblech ein Napf mit größerem Durchmesser eingezogen wird und somit eine Tube mit größerem Durchmesser und größerer Länge ausgebildet wird. Nachfolgend wird die derartig ausgebildete Tube durch Stauchen in ihrer Länge und ihrem Durchmesser verkleinert unter Erhöhung ihres Wanddurchmessers, wozu in mehreren Prozessschritten ein Gesenk auf die Tube einwirkt. Nach Fertigstellung des Bolzens 4 wird der Befestigungsbereich 3 durch ein oder mehrere weitere Prozessschritte hergestellt, wobei z. B. ein einziger Tiefziehvorgang ausreichend sein kann.

Das Innengewinde 9 in dem Loch 4a des rohrförmigen Bolzens 4 kann bereits durch Rollformen in dem Umformwerkzeug oder auch nachfolgend durch Gewindeschneiden ausgebildet werden.

Die in dem vom Coil abgewickelten Blechstreifen ausgebildeten Lagerbolzen-Bauteile 2 werden abschließend im letzten Schritt vom Werkzeug abgeschnitten. Nachfolgend können wahlweise die Flansche 5 angebracht werden, falls derartige Flansche nicht bereits in dem Ausgangsblech mit ausgebildet werden.

Das Lagerbolzen-Bauteil 2 wird somit einteilig hergestellt und weist keine Schweißnähte auf.

Das Ausgangsblech kann z.B. eine Dicke von 2,5 mm aufweisen.

## Patentansprüche

1. Lagerbolzen-Bauteil (2) zur Befestigung an einem Lehnenteil (1) eines Fahrzeugsitzes und zum Einsatz in eine Lageraufnahme eines Sitzrahmens, wobei das Lagerbolzen-Bauteil (2) aufweist:
einen Befestigungsbereich (3) zur Befestigung an dem Lehnenteil (1) des Fahrzeugssitzes, und
einen Bolzen (4) zum schwenkbaren Einsatz in eine Lageraufnahme des Sitzrahmens,
**dadurch gekennzeichnet, dass**
das Lagerbolzen-Bauteil (2) als einteiliges Umformteil aus Stahlblech hergestellt ist, und
in dem vorderen Bereich des Bolzens (4) ein Loch (4a) mit einem Innengewinde (9) ausgebildet ist.

2. Lagerbolzen-Bauteil nach Anspruch 1, **dadurch gekennzeichnet, dass** an der Unterseite des Befestigungsbereichs (3) ein oder mehrere seitlich vorstehende Flansche (5a, 5b) zur Laserverschweißung am Lehnenteil (1) ausgebildet sind.

3. Fahrzeugsitz, der aufweist:
einen Sitzrahmen,
ein Lehnenteil (1), das in einer Lehnenachse (A) schwenkbar am Sitzrahmen aufgenommen ist,
wobei am Lehnenteil (1) ein Lagerbolzen-Bauteil (2) nach einem der vorherigen Ansprüche angebracht ist, dessen Bolzen (4) schwenkbar in die Lageraufnahme des Sitzrahmens eingesetzt ist.

4. Fahrzeugsitz nach Anspruch 3, **dadurch gekennzeichnet, dass** in ein Innengewinde (9) des Bolzens (4) eine Schraube (10) eingesetzt ist.

## Claims

1. Bearing pin component (2) for fastening to a backrest part (1) of a vehicle seat and for insertion in a bearing receptacle in a seat frame, wherein the bearing pin component (2) has:
a fastening region (3) for fastening to the backrest part (1) of the vehicle seat, and
a pin (4) for pivotable insertion in a bearing receptacle in the seat frame,
**characterised in that**
the bearing pin component (2) is manufactured from sheet steel as a one-piece shaped part, and
a hole (4a) with an internal thread (9) is constructed in the front region of the pin (4).

2. Bearing pin component according to claim 1, **characterised in that**
one or more laterally protruding flanges (5a, 5b) for laser welding to the backrest part (1) are constructed on the underside of the fastening region (3).

3. Vehicle seat which has:
a seat frame,
a backrest part (1) which is pivotably received on the seat frame in an axis (A) of the backrest,
there being attached to the backrest part (1) a bearing pin component (2) according to one of the preceding claims, whose pin (4) is pivotably inserted in the bearing receptacle in the seat frame.

4. Vehicle seat according to claim 3, **characterised in that** a screw (10) is inserted in an internal thread (9) in the pin (4).

## Revendications

1. Composant à tourillon (2) destiné à être fixé sur une partie du dossier (1) d'un siège de véhicule et à être inséré dans une réception du palier d'un bâti du siège, le composant à tourillon (2) présentant :
une zone de montage (3) destinée à être fixée sur une partie du dossier (1) du siège de véhicule et
un tourillon (4) destiné à être inséré de manière pivotable dans une réception du palier du bâti du siège,
**caractérisé en ce que**
le composant à tourillon (2) est fabriqué comme pièce monocorps déformée en tôle d'acier et
que dans la région avant du tourillon (4) est réalisé un trou (4a) avec un filet intérieur (9)

2. Composant à tourillon suivant la revendication 1, **caractérisé en ce qu'**un ou plusieurs collets (5a, 5b) faisant saillie latéralement et étant destinés à être soudés au laser sur une partie du dossier (1) sont réalisés sur la face inférieure de la zone de montage (3).

3. Siège de véhicule présentant:
un bâti du siège,
une partie du dossier (1) qui est reçue de manière pivotable sur le bâti du siège, selon un axe du dossier (A) ,
un composant à tourillon (2) suivant une des revendications précédentes étant monté sur la partie du dossier (1), composant à tourillon (2), dont le tourillon (4) est inséré de manière pivotable dans la réception du palier du bâti du siège.

4. Siège de véhicule suivant la revendication 3, **caractérisé en ce qu'**une vis (10) est insérée dans un filet intérieur (9) du tourillon (4).
